# EUROPEAN PATENT APPLICATION

(11) **EP 2 713 312 A2**
(43) Date of publication of application: **02.04.2014**
(21) Application number: 13177487.9
(22) Date of filing: 22.07.2013
(51) Int. Cl.: G06K 9/03

(54) **Image processing system and image processing method**

(30) Priority: 28.09.2012 JP 2012217682
(71) Applicant: OMRON CORPORATION, Kyoto-shi, Kyoto 600-8530 (JP)
(72) Inventor: Araki, Tsunehiko, Kyoto, Kyoto 600-8530 (JP); Taniyasu, Yuki, Kyoto, Kyoto 600-8530 (JP)
(74) Representative: Horn Kleimann Waitzhofer

(57) **Abstract**

PROBLEM: To provide an image processing system including a user interface, in which the user can easily set a restricting condition used in the character recognition even if the user does not know the input rule, as well as an image processing method.

MEANS FOR SOLVING PROBLEM: Provided is an image processing system that acquires character information from an input image. The image processing system includes a processor that performs character recognition to a region included in the input image under a predetermined restricting condition and a display operation unit that receives a setting of the restricting condition. The restricting condition includes at least designation of a character class in each character of a recognition target. The display operation unit displays, on an identical screen, a region indicating the set restricting condition and a plurality of objects correlated with a plurality of character classes that can be designated, and adds, when any one of the objects is selected, the character class correlated with the selected object to the restricting condition.

## Description

### BACKGROUND OF THE INVENTION

### TECHNICAL FIELD

The present invention relates to an image processing system and an image processing method for acquiring character information from an input image.

### RELATED ART

In an FA (Factory Automation) field or the like, what is called a vision sensor is put into practical use as a device that optically detects a defect generated in a half-finished product in a production process or a production before shipment or optically measures a size of the defect.

As to a utilization form of the vision sensor, for example, character recognition is performed to the input image obtained by imaging a target object, thereby acquiring character information from the input image. In the character recognition, the character is recognized (specified) by calculating a degree of coincidence between a partial image in the input image and an image or a feature quantity of the predetermined character.

As to character recognition processing, for example, Japanese Unexamined Patent Publication No. JP H02-072497 (Patent Document 1) discloses an optical character reading apparatus that performs read processing to a character recorded in a read field based on format control data. The format control data includes pieces of information, such as a position of the read field, a character class of the recorded character, a character font, and a character pitch, and read accuracy can be enhanced using the format control data.

Japanese Unexamined Patent Publication No. JP H06-036069 (Patent Document 1) discloses a character recognition apparatus that improves a recognition rate by enabling detailed designation using a regular expression in designating the character class of format control information.

According to the technologies disclosed in these prior art documents, the recognition rate is improved by previously designating the format control information (the format control data).

### PRIOR ART DOCUMENTS

### PATENT DOCUMENTS

Patent Document 1: JP H02-072497A
Patent Document 2: JP H06-036069A

### OUTLINE OF THE INVENTION

### PROBLEMS TO BE SOLVED BY THE INVENTION

In setting the format control information, it is necessary for a user to learn an input rule. Realistically the input rule is described in a help screen or a manual, and the user inputs the format control information while referring to the input rule.

However, in the case that a display screen is relatively narrow, sometimes a region where the help screen is displayed can insufficiently be ensured. It is troublesome that the user inputs the format control information while referring to the paper-based manual. It takes a long time for the user who is unfamiliar with the input rule to input the format control information.

The present invention has been devised to solve the problems described above, and an object thereof is to provide an image processing system including a user interface, in which the user can easily set a restricting condition used in the character recognition even if the user does not learn the input rule, and an image processing method.

### MEANS FOR SOLVING THE PROBLEM

In accordance with one aspect of the present invention, an image processing system that acquires character information from an input image, the image processing system includes: a processor that performs character recognition to a region included in the input image under a predetermined restricting condition; and a display operation unit that receives a setting of the restricting condition, wherein the restricting condition includes at least designation of a character class in each character of a recognition target, and the display operation unit displays, on an identical screen, a region indicating the set restricting condition and a plurality objects correlated with a plurality of character classes that can be designated, and adds, when any one of the objects is selected, the character class correlated with the selected object to the restricting condition.

In the image processing system, preferably the restricting condition is displayed using a symbol corresponding to each character class, and the symbol corresponding to the character class is displayed in each of the objects together with a message illustrating the correlated character class.

In the image processing system, preferably the restricting condition further includes designation of a specific character, and the display operation unit further displays an object correlated with the specific character that can be designated.

In the image processing system, preferably the display operation unit displays a plurality of objects correlated with a plurality of specific characters that can be designated instead of the object correlated with the character class while the specific characters are disposed in accordance with a predetermined array when switching of the display is selected.

In the image processing system, preferably the display operation unit determines the character class of each character from character information, the character information is acquired by performing the character recognition to a reference image including a character string of the recognition target, and sets the character class of the character to an initial value of the restricting condition.

In the image processing system, preferably the display operation unit displays the reference image together with the set restricting condition.

In accordance with another aspect of the present invention, an image processing method for acquiring character information from an input image, the image processing method includes the steps of: presenting a screen in order to receive a setting of a restricting condition related to character recognition; and performing the character recognition to a region included in the input image under the set restricting condition, wherein the restricting condition includes at least designation of a character class in each character of a recognition target, and the screen presenting step includes the steps of: displaying, on an identical screen, a region indicating the set restricting condition and a plurality of objects correlated with a plurality of character classes that can be designated, and adding the character class correlated with the selected object to the restricting condition when any one of the objects is selected.

### EFFECT OF THE INVENTION

According to the present invention, the user can easily set the restricting condition used in the character recognition even if the user does not learn the input rule.

### BRIEF DESCRIPTION OF THE DRAWINGS

Fig. 1 is an outside drawing illustrating an entire configuration of an image processing system according to an embodiment;
Fig. 2 is a schematic diagram illustrating a functional configuration of the image processing system of the embodiment;
Fig. 3 is a schematic diagram illustrating a processing content of character recognition in the image processing system of the embodiment;
Fig. 4 is a schematic diagram illustrating an example of a user interface screen used to set a character format provided by the image processing system of the embodiment;
Fig. 5 is a schematic diagram illustrating an example of the user interface screen used to set the character format provided by the image processing system of the embodiment;
Fig. 6 is a flowchart illustrating a processing procedure of an image processing method for acquiring character information from an input image in the image processing system of the embodiment;
Fig. 7 shows conceptual views each illustrating character format setting processing in an image processing system according to a modification of the embodiment; and
Fig. 8 is a schematic diagram illustrating an example of the user interface screen used to set the character format provided by an image processing system of the modification of the embodiment.

### EMBODIMENTS OF THE INVENTION

Hereinafter, an embodiment of the present invention will be described in detail with reference to the drawings. In the drawings, the identical or equivalent component is designated by the identical numeral, and the overlapping description is omitted.

### (A. Device configuration of image processing system)

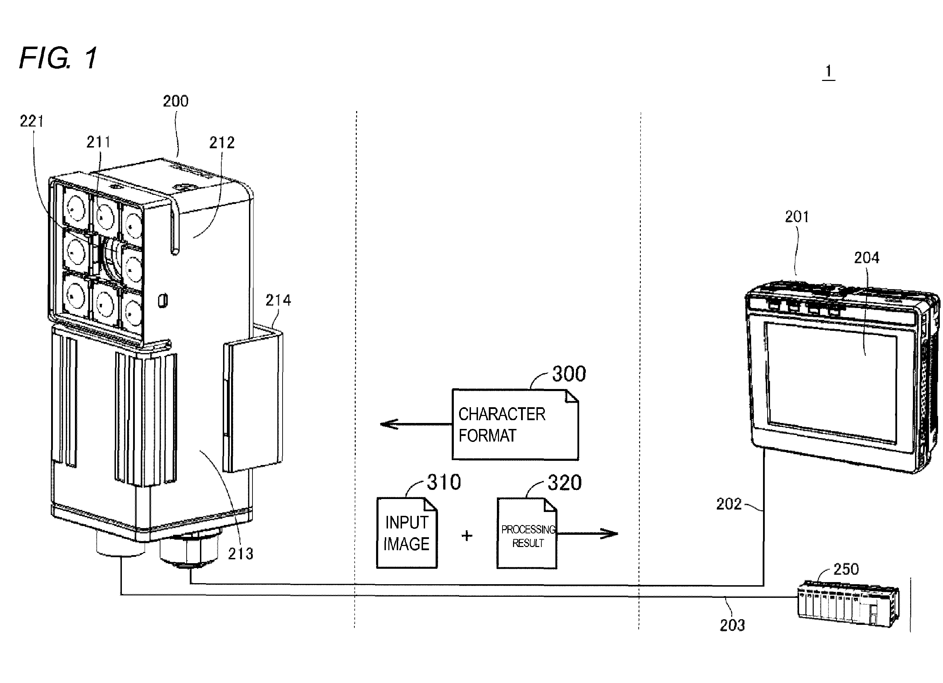

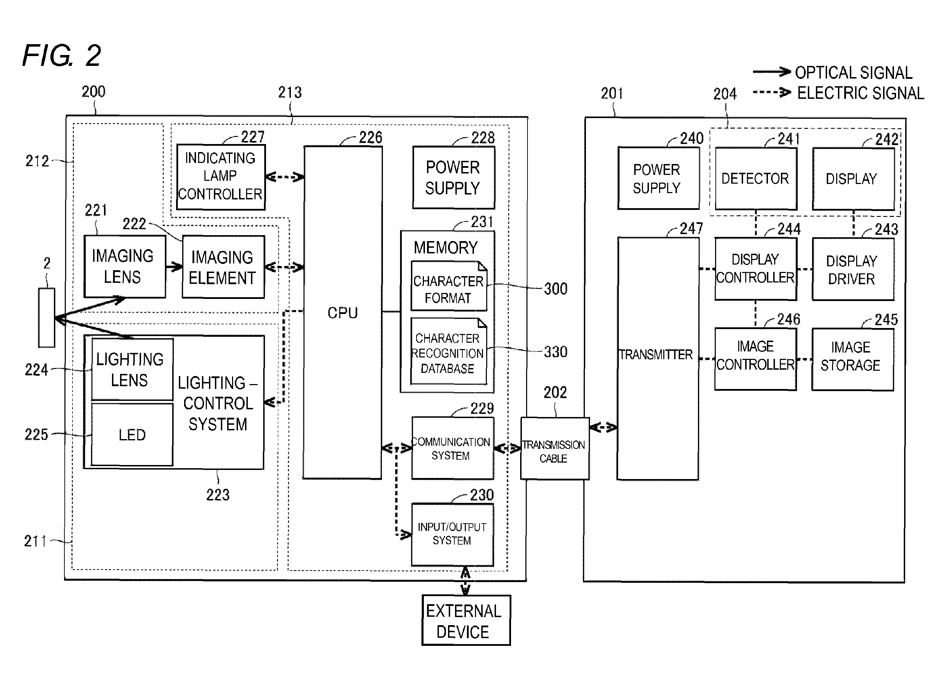

A device configuration of an image processing system of the embodiment will be described. Fig. 1 is an outside drawing illustrating an entire configuration of an image processing system 1 of the embodiment. Fig. 2 is a schematic diagram illustrating a functional configuration of the image processing system 1.

Referring to Fig. 1, for example, the image processing system 1 is incorporated in a production line. The image processing system 1 in Fig. 1 acquires character information from an input image as one of functions thereof. More specifically, a vision sensor 200 has a function of acquiring the character information from the input image such that character recognition is performed to the input image acquired by imaging a target (also referred to as a "workpiece 2"). Particularly, the vision sensor 200 performs the character recognition under a predetermined restricting condition. Text data may be output as a result of the character recognition.

As used herein, the "restricting condition" is a condition that further restricts a recognition candidate in performing the character recognition, and hereinafter the "restricting condition" is also referred to as a "character format". Typically, the restricting condition (the character format) includes designation of a character class (such as an alphanumeric character, an alphabetic character, a numerical character, a symbolic character, a special character, a kanji, a hiragana, and a katakana), designation of a specific character (such as characters "A", "B", ... of the alphabets, characters ""', "-", ... of the symbols, characters "a", "i", ... of the hiraganas, and characters "a", "i", ... of the katakanas), designation of a font class, and designation of a character size (a font size) in each character of the recognition target. A recognition rate can be improved (a false recognition rate can be lowered) with respect to the workpiece (product/half-finished product) in which a printing format is predetermined by previously designating the character format.

For example, when the character format is designated in the order of the "alphabetic character", the "alphabetic character", and the "numerical character", with respect to the character region including the plurality of character strings in the input image, the character candidate having the highest degree of coincidence is selected as the first character from the character candidates belonging to the "alphabetic character", the character candidate having the highest degree of coincidence is selected as the second character from the character candidates belonging to the "alphabetic character", and the character candidate having the highest degree of coincidence is selected as the third character from the character candidates belonging to the "numerical character". The speed enhancement of the processing and the improvement of the recognition rate can be achieved by restricting the restricting condition, namely, the target of the character recognition. The detailed character format is described later.

In addition to processing of reading the character region included in the input image to output text data indicating a content of the character region, the character recognition performed by the vision sensor 200 includes processing of extracting the region having the high degree of coincidence with the specific character included in the character format and a high degree of certainty of recognition in the designated character class. That is, in the latter processing, at least one region having the high degree of coincidence with the designated character format is extracted from the input image.

More specifically, the image processing system 1 includes the vision sensor 200 and a display operation unit 201. The vision sensor 200 and the display operation unit 201 can conduct communication with each other through a transmission cable 202 in accordance with a predetermined protocol.

The display operation unit 201 receives a setting of the character format, and displays the input image imaged by the vision sensor 200 and the processing result. A user operates the display operation unit 201 to transmit information on character format processing, thereby controlling image processing and imaging processing in the vision sensor 200. Fig. 1 illustrates the one vision sensor 200 connected to the display operation unit 201 by way of example. Alternatively, a plurality of vision sensors 200 may be connected to the display operation unit 201 through the transmission cable 202 and a hub (not illustrated).

In the image processing system 1 in Fig. 1, by way of example, a function of acquiring the input image and a function of performing the character recognition to the input image are incorporated in the vision sensor 200, and a function of designating various parameters necessary to perform the character recognition and a function of displaying a character recognition result are incorporated in the display operation unit 201. However, the present invention is not limited to the configuration of the embodiment. For example, all the functions may be incorporated in a single image processing device, or each function may be incorporated in separate devices. Alternatively, the function of imaging the target to acquire the input image target may be incorporated in the imaging device while the remaining functions are incorporated in the image processing device. Any embodiment can be included in the technical scope of the present invention when the embodiment has the configuration described in the claim of the present invention.

The vision sensor 200 is connected to a PLC (Programmable Logic Controller) 250 through an IO cable 203 while being communicable with each other. The PLC 250 receives a signal from another device or transmits a signal to the device, thereby controlling the whole of the image processing system 1.

The vision sensor 200 includes an imaging part 212 and a processor 213, and the imaging part 212 includes a lighting part 211 and an imaging lens 221. The processor 213 is provided with a microcomputer. An attaching part 214 that attaches the vision sensor 200 to a support member (not illustrated) is provided in a casing of the vision sensor 200.

The display operation unit 201 includes a touch panel 204 in which a display, such as an LCD (Liquid Crystal Display) and an organic EL (Organic Electro-Luminescence), and a detector receiving an instruction by touching the display with a finger or a stylus are integrally formed.

The display operation unit 201 transmits a character format 300 set by the user to the vision sensor 200, and the vision sensor 200 transmits a processing result 320 to the display operation unit 201. The processing result 320 includes the input image acquired by imaging the target and the character recognition result obtained by performing the character recognition to the acquired input image 310.

Functional configurations of the vision sensor 200 and the display operation unit 201 will be described below with reference to Fig. 2.

The vision sensor 200 includes the lighting part 211 that lights the workpiece 2 that is of the target, the imaging part 212 that images the workpiece 2, and the processor 213. The lighting part 211 includes a lighting control system 223, and the lighting control system 223 includes a lighting lens 224 and an LED (Light Emitting Diode) 225 that is of a light source. The imaging part 212 includes the imaging lens 221 and an imaging element 222.

The processor 213 includes an indicating lamp controller 227 that controls an indicating lamp (an indicator) such as a lamp (not illustrated), a CPU 226 that performs various pieces of processing of the vision sensor 200, a power supply 228 that supplies an electric power to each part, a communication system 229 that is connected to the transmission cable 202, an input/output system 230 that inputs and outputs data to and from an external device, and a memory 231 in which various pieces of data such as the input image and the processing result are stored in addition to the character format 300 and a character recognition database 330. The character recognition database 330 includes information (a pattern or a feature quantity) on each character to which the character recognition is performed.

The display operation unit 201 includes a power supply 240 that supplies the electric power to each part, the touch panel 204 having a detector 241 that receives the instruction from the outside and a display 242, a display driver 243 that controls a display on the display 242, a display controller 244 that controls the image displayed on the display 242 through a display driver 243, an image storage 245 in which the image is stored, an image controller 246 that deals with the image received from the vision sensor 200, and a transmitter 247 that transmits and receives the data to and from the vision sensor 200.

The display operation unit 201 is configured to be detachably attached to the vision sensor 200. In a typical usage pattern, the display operation unit 201 is downsized so as to be brought with the user who patrols the production line in a production site. Therefore, a size of the display 242 of the display operation unit 201 is also reduced.

The display 242 displays the image based on a control signal from the display driver 243. Based on an image signal from the display controller 244, the display driver 243 generates the control signal in order to control display processing of the display 242, and outputs the control signal to the display 242.

Based on the instruction from the user through the detector 241, screen information provided from the image controller 246, and the input image and the processing result, which are provided from the vision sensor 200 through the transmitter 247, the display controller 244 generates a user interface screen and displays the user interface screen on the display 242 through the display 242 display driver 243.

The display controller 244 transmits parameters, such as the character format, which are set based on the instruction from the user through the detector 241, to the vision sensor 200 through the transmitter 247.

A processor may execute a program to implement the functional configuration in Fig. 2. Alternatively, the functional configuration may be implemented with a dedicated integrated circuit, such as an ASIC (Application Specific Integrated Circuit), which includes a main processing circuit of the vision sensor 200 and/or the display operation unit 201 and a peripheral circuit thereof.

### (B. Character format)

The character format dealt with by the image processing system 1 will be described below. In the image processing system 1 of the embodiment, the character classes such as the "numerical character", the "alphabetical character", the "alphanumeric character", and the "symbolic character" can be designated as an example of the character format. The character classes can be designated in each character of the recognition target.

The "numerical character" designates the numerical characters "0", "1", ..., "9" (recognition target: "0" to "9"). It is assumed that the "numerical character" is indicated by a symbol "#" in the image processing system 1.

The "alphabetical character" designates the alphabetic characters "A", "B", ..., "Z" (recognition target: "A" to "Z"). It is assumed that the "alphabetical character" is indicated by a symbol "$" in the image processing system 1. A capital letter and a lower-case character may be distinguished from each other as the "alphabetical character". At this point, each of the capital letter and the lower-case character may be dealt with as a further segmentalized character class. For example, an "alphanumeric capital letter" and an "alphanumeric lower-case character" may be used as the character class.

The "alphanumeric character" is the character class (recognition target: all the characters except the symbolic character) including the "numerical character" and the "alphabetical character". It is assumed that the "alphanumeric character" is indicated by a symbol "?" in the image processing system 1.

The "symbolic character" designates the symbolic characters ""' (apostrophe), "-" (hyphen), "." (period), ":" (colon), and "/" (slash) (recognition target: ""', "-", ".", ":", and "/"). It is assumed that the "symbolic character" is indicated by a symbol "@" in the image processing system 1.

For example, the false recognition can be prevented between 0 (zero) and O by designating a wildcard ("#", "?", and "@").

In the image processing system 1, the specific character can be designated in addition to the character class. The specific character means one character selected from recognizable characters, and any one of the numerical characters "0", "1", ..., "9", the alphabetic characters "A", "B", ..., "Z", and the symbolic characters ""', "-", ".", ":", and "/" is selected. In the case that the specific character is designated, similarity degree calculation processing and stability degree determination processing are performed only between a partial image of the recognition target and the designated specific character. Whether the partial image of the recognition target is matched with the designated specific character is determined.

A character attribute excluded from the character recognition target can also be designated in addition to the designation of the character class or the specific character. It is assumed that the character excluded from the character recognition target is indicated by a symbol "*", and the symbol "*" means a skip. In the case that the skip attribute is designated, the similarity degree calculation processing and stability degree determination processing are skipped. At this point, the character excluded from the character recognition target may also be excluded from the number of detection characters. When the skip attribute is designated, the character in which the false recognition is easily generated can be excluded from the character recognition target, and the character recognition processing can more stably be performed.

### (C. Character recognition processing)

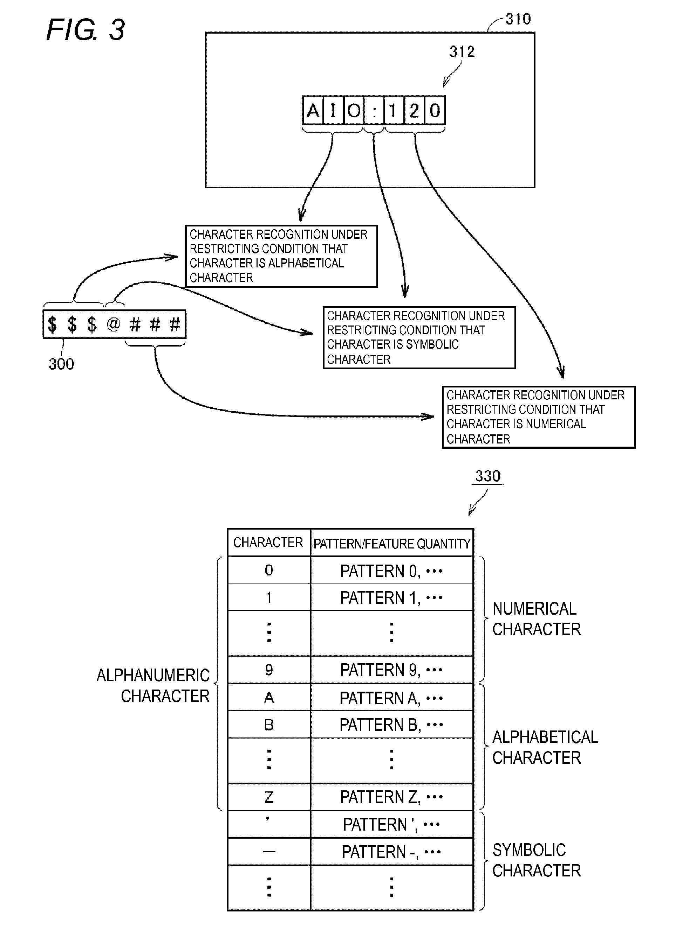

The character recognition processing in which the character format is used will be described below. Fig. 3 is a schematic diagram illustrating a processing content of the character recognition in the image processing system 1 of the embodiment.

Referring to Fig. 3, in the vision sensor 200, a character region 312 is extracted from the input image 310 obtained by imaging the target. The character region 312 is specified by performing edge extraction processing or the feature quantity extraction processing to the input image 310. A region (the partial image) of each character included in the character region 312 is extracted. Because a well-known technology can be used in the processing of extracting the region (the partial image) corresponding to the image of each character, the detailed description is omitted.

Then the vision sensor 200 performs the character recognition to the region of each character. A character recognition database 330 is previously prepared for the purpose of the character recognition. Typically, the character recognition database 330 includes identification information (the pattern or the feature quantity) specifying each character. The corresponding character class is added to each character stored in the character recognition database 330. That is, the information indicating that the character class is the "numerical character" is added to the numerical characters "0", "1", ..., "9", and the information indicating that the character class is the "alphabetic character" is added to the alphabetic characters "A", "B", ..., "Z".

Fig. 3 illustrates a typical example of the character recognition processing, and any method can be adopted as the character recognition processing in the present invention.

The vision sensor 200 specifies the character corresponding to the region (the partial image) of each character by referring to the character recognition database 330 in the character format 300. "$$$@###" is designated in the character format 300 in Fig. 3. A method for describing the character format 300 is not limited to one in Fig. 3, but any method may be adopted.

The character format in Fig. 3 indicates that the first to third characters from the left are the "alphabetical characters", that the fourth character is the "symbolic character", and that the fifth to seventh characters are the "numerical characters". The vision sensor 200 calculates the degree of coincidence with respect to each of the first to third characters included in the character region 312 while each character of the alphabetical character included in the character recognition database 330 is used as the candidate. That is, the vision sensor 200 calculates the degree of coincidence between the first character included in the character region 312 and the alphabetic characters "A", "B", ..., "Z". The vision sensor 200 (basically) outputs the alphabetic character having the highest degree of coincidence in the alphabetic characters as the recognition result. The vision sensor 200 repeats the similar processing with respect to the characters from the second character included in the character region 312.

In the example in Fig. 3, the second character of the character region 312 is "I", and the third character is "O". The use of the character format 300 can prevent "I" and "O" from being falsely recognized as "1 (one)" and "0 (zero)". Similarly, in the example in Fig. 3, the fifth character of the character region 312 is "1", and the seventh character is "0". The use of the character format 300 can prevent "1 (one)" and "0 (zero)" from being falsely recognized as "I" and "O".

Because frequently a printing format is predetermined for a model number, a price, a date of manufacture, an identification number of the product, and the like, the character format can easily be applied, and therefore the recognition rate can be improved (the false recognition rate can be lowered).

As described above, the specific character can also be designated in the character format 300. In the case that the specific character is designated, some sort of pattern matching processing is performed. In the example in Fig. 3, for example, when "$$$:###" is designated as the character format 300, the degree of coincidence between the fourth character included in the character region 312 and ":" (colon) is calculated, and the degree of coincidence is output as the effective recognition result only when the degree of coincidence is larger than a predetermined value. Therefore, only the character in which the fourth character included in the character region 312 is recognized as ":" (colon) is extracted. In this case, sometimes the plurality of character regions 312 are extracted from the input image 310.

### (D. Character format setting)

A user interface used to set the character format described above will be described below. An operation mode of the image processing system 1 of the embodiment includes an adjustment mode in which various parameters relating to the measurement processing including the character recognition processing are adjusted and an operating mode in which the measurement processing is actually performed. Basically the user interface screen to be described below is displayed in the adjustment mode. Alternatively the user interface screen may be displayed in the operating mode.

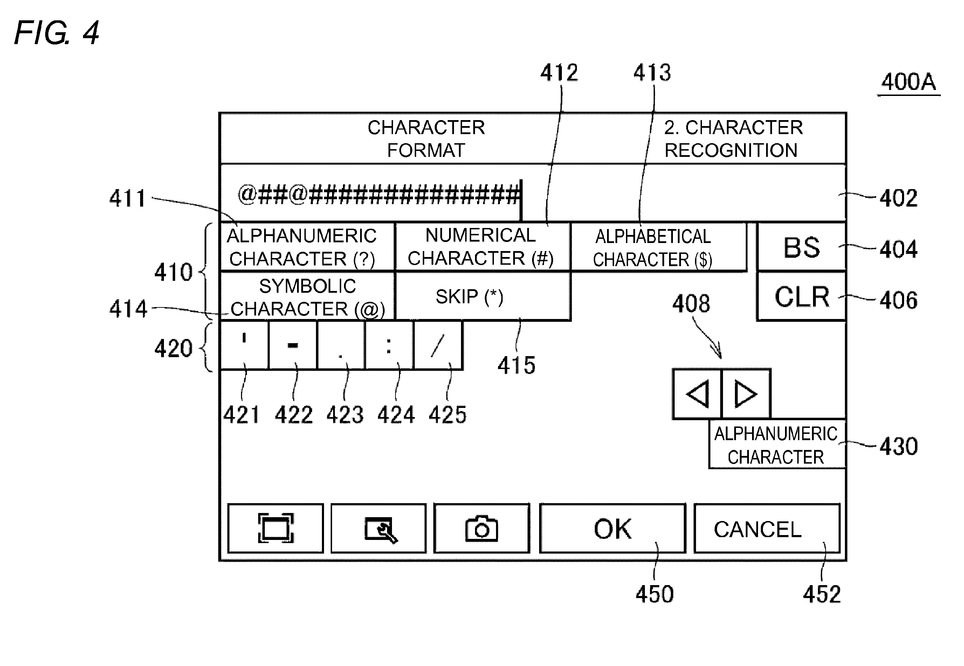

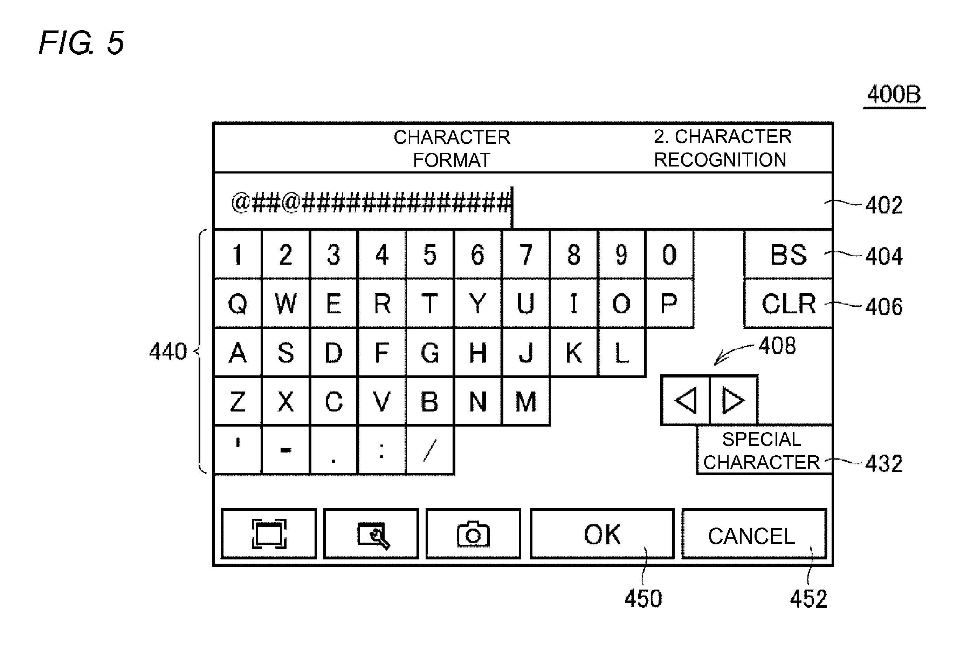

Figs. 4 and 5 are schematic diagrams illustrating examples of the user interface screen used to set the character format provided by the image processing system 1 of the embodiment. User interface screens 400A and 400B in Figs. 4 and 5 are provided by the display operation unit 201.

In the user interface screen 400A in Fig. 4, a display region 402 indicating the set character format and the plurality of objects 410 in which the plurality of character classes that can be designated respectively are displayed, namely, the display region 402 and the objects 410 are displayed on the identical screen. In the example in Fig. 4, the currently-designated character formats are displayed in the display region 402. When the user selects any one of the objects 410, the character format corresponding to the selected object is added to the display region 402. That is, when any one of the objects 410 is selected, the display operation unit 201 adds the character class correlated with the selected object to the character format.

More specifically, the plurality of objects 410 includes an object 411 designating the "numerical character", an object 412 designating the "numerical character", an object 413 designating the "alphabetical character", an object 414 designating the "symbolic character", and an object 415 designating a "skip attribute". Typically, the display operation unit 201 includes a touch panel 204, and the user selects the target on the user interface screen 400A displayed in the touch panel 204, thereby setting the target character format.

In the display region 402, the set character format is displayed using the symbol correlated with each character class. That is, the character format is defined by the symbols "#", "$", and "@". In order to understand the meaning of the symbol at first glance, a message (displays such as "ALPHANUMERIC CHARACTER" and "NUMERICAL CHARACTER") indicating the correlated character class and the symbol (such as "?" and "#") corresponding to the character class are displayed in each of the objects 411 to 415 constructing the object 410 on the user interface screen 400A in Fig. 4.

The message is added to the object 410 (the objects 411 to 415) such that the meaning of the correlated character class can be understood at first glance, and the symbol indicating the corresponding character class is also added to the object 410, so that the user can easily understand the content of the currently-set character format displayed in the display region 402 even if the user does not previously learn the meaning of each symbol.

A plurality of objects 420 correlated with the specific characters that can be designated are also displayed on the user interface screen 400A. Particularly, objects 421 to 425 correlated with the symbolic character considered to have a high use frequency are disposed in the user interface screen 400A. That is, the plurality of objects 420 includes the object 421 correlated with ""', the object 422 correlated with "-", the object 423 correlated with ".", the object 424 correlated with ":", and the object 425 correlated with "/". The objects 420 (the objects 421 to 425) are also added to the character format in accordance with the selection of the user.

An object that edits the currently-set character format is also displayed on the user interface screen 400A. For example, an object 404 correlated with a backspace operation (an operation to delete the immediately preceding character of the cursor), an object 406 correlated with a clear operation (an operation to wholly delete the currently-set character format), and an object 408 correlated with an operation to move the cursor are disposed on the user interface screen 400A.

An object 450 in which "OK" is displayed is disposed in the user interface screen 400A. When the object 450 is selected, the currently-set character format is validated. An object 452 in which "CANCEL" is displayed is disposed in the user interface screen 400A. When the object 452 is selected, the currently-set character format is canceled, and the user interface screen 400A makes the transition to a menu screen (not illustrated).

The user selects the object 430 in the case that it is necessary to individually designate the specific character. Therefore, the user interface screen 400A in Fig. 4 makes the transition to the user interface screen 400B in Fig. 5.

Referring to Fig. 5, in the user interface screen 400B, an object 440 is disposed instead of the objects 410 and 420 of the user interface screen 400A. In the object 440, the specific characters that can be designated are disposed by a predetermined rule. In the example in Fig. 5, the numerical characters and the alphabet are arrayed in a QWERTY format. There is no particular limitation to the array of the specific characters, but the specific characters may be arrayed in the alphabetic order or another array order. Using the user interface screen 400B, the user can set the desired specific character to the character format.

When the object 430 that issues an instruction to switch the display is selected in the user interface screen 400A in Fig. 4, as illustrated in the user interface screen 400B in Fig. 5, instead of the objects (the objects 410 and 420) correlated with the character class, the display operation unit 201 displays the plurality of objects 440 correlated with the plurality of specific characters that can be designated while the plurality of objects 440 are disposed in accordance with a predetermined array.

The use of the user interface screens in Figs. 4 and 5 can easily designate the character class as the character format even if the user has a poor knowledge about the character format.

### (E. Processing procedure)

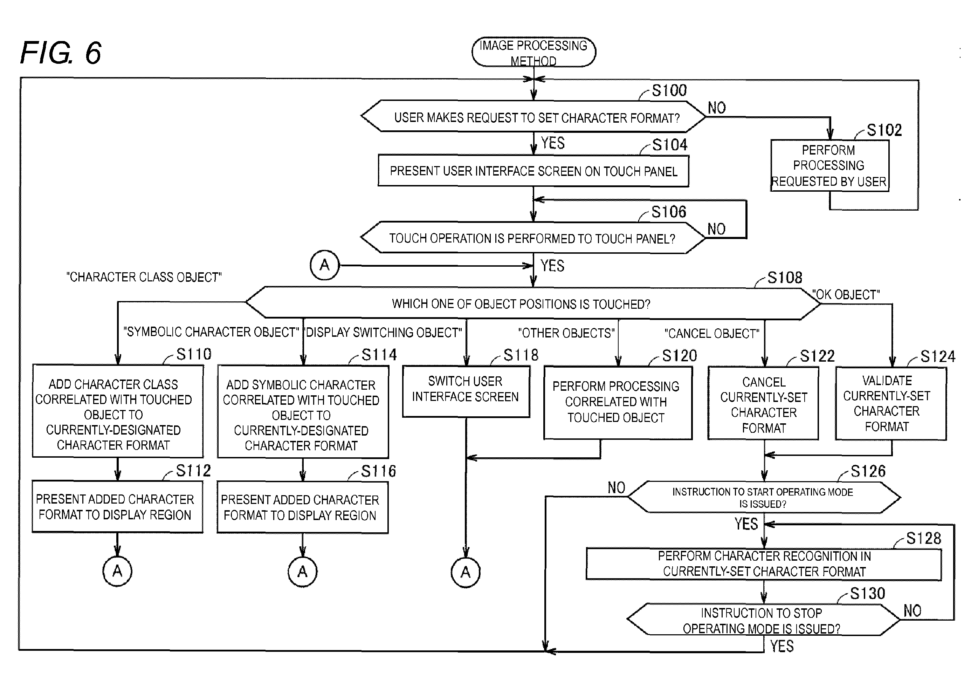

A processing procedure of the image processing method for acquiring the character information from the input image in the image processing system 1 of the embodiment will be described below. Fig. 6 is a flowchart illustrating a processing procedure of the image processing method for acquiring the character information from the input image in the image processing system 1 of the embodiment. It is assumed that the adjustment mode is selected at the beginning of the processing procedure in Fig. 6.

Referring to Fig. 6, the display operation unit 201 determines whether the user makes a request to set the character format (Step S100). When the user does not make the request to set the character format (NO in Step S100), the display operation unit 201 performs the processing requested by the user (Step S102). The pieces of processing from Step S100 are repeated.

When the user makes the request to set the character format (YES in Step S100), the display operation unit 201 presents the user interface screen 400A (Fig. 4) on the touch panel 204 in order to set the character format (Step S104). That is, the display operation unit 201 performs the processing of presenting the screen used to receive the setting of the character format related to the character recognition. At this point, the display operation unit 201 displays the display region 402 indicating the set character format and the plurality of objects 410 in which the plurality of character classes that can be designated on the user interface screen 400A.

The display operation unit 201 determines whether the touch operation is performed to the touch panel 204 (Step S106). When the touch operation is not performed to the touch panel 204 (NO in Step S106), the processing in Step S106 is repeated.

When the touch operation is performed to the touch panel 204 (YES in Step S106), the display operation unit 201 determines which one of the positions of the objects is touched (Step S108).

When one of the objects 410 (the objects 411 to 415) is touched ("CHARACTER CLASS OBJECT" in Step S108), the display operation unit 201 adds the character class correlated with the touched object to the currently-designated character format (Step S110), and the display operation unit 201 displays the added character format in the display region 402 (Step S112). That is, when any one of the objects is selected, the display operation unit 201 performs the processing of adding the character class correlated with the selected object to the character format. The pieces of processing from Step S108 are repeated.

When one of the objects 420 (the objects 421 to 425) is touched ("SYMBOLIC CHARACTER OBJECT" in Step S108), the display operation unit 201 adds the symbolic character correlated with the touched object to the currently-designated character format (Step S114), and the display operation unit 201 displays the added character format in the display region 402 (Step S116). The pieces of processing from Step S108 are repeated.

When the object 430 is touched ("DISPLAY SWITCHING OBJECT" in Step S108), the display operation unit 201 presents the user interface screen 400B in Fig. 5 on the touch panel 204 instead of the user interface screen 400A (Step S118). The pieces of processing from Step S108 are repeated.

When other objects are touched ("OTHER OBJECTS" in Step S108), the display operation unit 201 performs the processing correlated with the touched object (Step S120). The pieces of processing from Step S108 are repeated.

When the object 452 indicating "CANCEL" is touched ("CANCEL OBJECT" in Step S108), the display operation unit 201 cancels the currently-set character format (Step S122), and the pieces of processing from Step S126 are performed.

When the object 450 indicating "OK" is touched ("OK OBJECT" in Step S108), the display operation unit 201 validates the currently-set character format (Step S124), and the pieces of processing from Step S126 are performed.

The display operation unit 201 determines whether the instruction to start the operating mode is issued (Step S126). When the instruction to start the operating mode is not issued (NO in Step S126), the pieces of processing from Step S100 are performed.

When the instruction to start the operating mode is issued (YES in Step S126), the character recognition is started in the currently-set character format (Step S128). That is, the display operation unit 201 transmits the set character format to the vision sensor 200, and the vision sensor 200 acquires the input image by imaging the target according to a predetermined trigger condition, and performs the character recognition to the acquired input image. In other words, the vision sensor 200 performs the character recognition to the region included in the input image in the set character format.

The display operation unit 201 determines whether the instruction to stop the operating mode is issued (Step S130). When the instruction to stop the operating mode is not issued (NO in Step S130), the pieces of processing from Step S128 are performed. When the instruction to stop the operating mode is issued (YES in Step S130), the pieces of processing from Step S100 are performed.

### (F. Modification)

In the embodiment, the user manually sets the character format by way of example. Alternatively, in teaching processing, the setting of the character format may be assisted based on the character information read from the input image that becomes a reference. A configuration in which the setting of the character format is assisted based on the character information read from the input image will be demonstrated below.

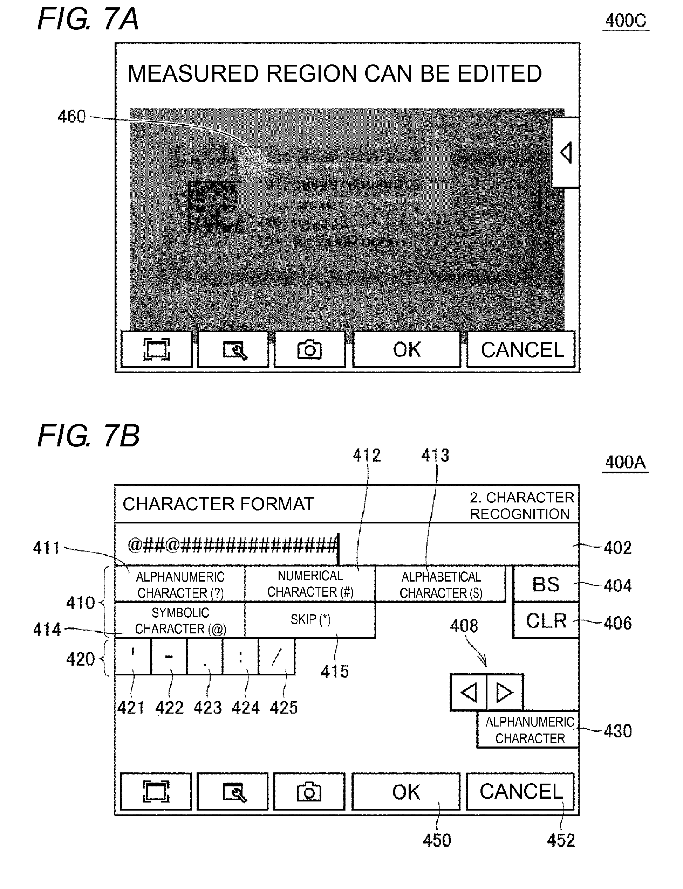

Figs. 7A and 7B are conceptual views each illustrating character format setting processing in an image processing system 1 according to a modification of the embodiment. Referring to Fig. 7A, the user acquires the input image by imaging the reference target that becomes the detection target, and designates the region 460 where the character string of the detection target exists as the acquired input image. In response to the designation of the region 460, the vision sensor 200 performs the character recognition. The character class of each character is determined based on the character information acquired by the character recognition, and the determined character class of each character is set to the initial value of the character format.

In a user interface screen 400C in Fig. 7A, the image obtained by imaging the target that becomes the reference of the character recognition is displayed, and the user designates the region where the character string of the detection target exists by the touch operation. The user interface screen 400A in Fig. 7B is displayed when the "OK" button is selected. As a result of the character recognition (in the example, "|01|08699783090012"), the display region 402 of the user interface screen 400A includes 18 characters, the first and fourth characters are the symbolic character, and other characters are the numerical character. In the initial value of the character format, the first and fourth characters from the left are the symbol "@" indicating the "symbolic character" and other characters are the symbol "#" indicating the "numerical character".

In the modification, the display operation unit 201 determines the character class of each character from the character information. The character information is acquired by performing the character recognition to the reference image including the character string of the recognition target, and sets the character class of each character to the initial value of the character format. The user more easily sets the character format by the assist function.

In correcting or editing the character format set to the initial value, sometimes the image of the region 460 where the character string of the detection target exists is more preferably displayed in the user interface screen. In this case, the image of the region 460 where the character string of the detection target exists may be displayed in the user interface screen 400 on which the character format is corrected or edited.

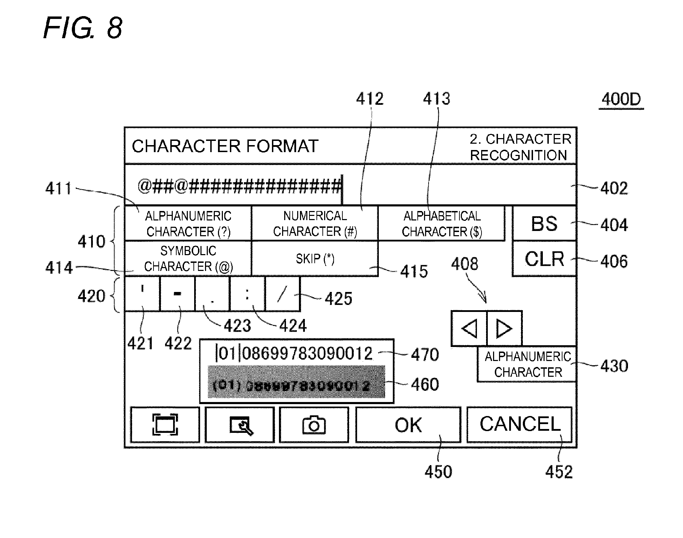

Fig. 8 is a schematic diagram illustrating an example of the user interface screen used to set the character format provided by the image processing system 1 of the modification of the embodiment. Referring to Fig. 8, in a user interface screen 400D, compared with the user interface screen 400A in Fig. 4, the image in the region 460, which is set with respect to the input image acquired by imaging the reference target to be a detection target, is additionally displayed in the identical screen, and a character string 470 indicating a character recognition result of the image in the region 460 is also additionally displayed. The user corrects or edits the character format while referring to the pieces of display information. Thus, the display operation unit 201 displays the reference image in addition to the set character format.

### (G. Advantage)

According to the embodiment, even if the user has the poor knowledge about the character format, the user can easily designate the character format that is of the restricting condition. According to the embodiment, even if the relatively small display (or the display having relatively low resolution) has neither a help screen on which the user is notified of the character format input rule nor a manual presenting space, the user can understand the contents of the input rule and currently-set character format at first glance without the needs for the help screen and the manual presenting space.

The embodiment is disclosed by way of example in every way, but the embodiment is not restrictive. The scope of the present invention is indicated not by the above description but by claims of the present invention, and the equivalent meaning of the claims and all the changes within the claims are also included in the scope of the present invention.

### INDEX TO THE REFERENCE NUMERALS

1 ... image processing system; 2 ... workpiece; 200 ... vision sensor; 201 ... display operation unit; 202 ... transmission cable; 203 ... IO cable; 204 ... touch panel; 211 ... lighting part; 212 ... imaging part; 213 ... processor; 214 ... attaching part; 221 ... imaging lens; 222 ... imaging element; 223 ... lighting control system; 224 ... lighting lens; 226 ... CPU; 227 ... indicating lamp controller; 228, 240 ... power supply, 229 ... communication system; 230 ... input/output system; 231 ... memory; 241 ... detector; 242 ... display; 243 ... display driver; 244 ... display controller; 245 ... image storage; 246 ... image controller; 247 ... transmitter; 250 ... PLC; 300 ... character format; 310 ... input image; 312 ... character region; 320 ... processing result; 330 ... character recognition database.

## Claims

1. An image processing system that acquires character information from an input image, the image processing system comprising:
a processor that performs character recognition to a region included in the input image under a predetermined restricting condition; and
a display operation unit that receives a setting of the restricting condition,
wherein
the restricting condition includes at least designation of a character class in each character of a recognition target, and
the display operation unit displays, on an identical screen, a region indicating the set restricting condition and a plurality of objects correlated respectively with a plurality of character classes that can be designated, and adds, when any one of the objects is selected, the character class correlated with the selected object to the restricting condition.

2. The image processing system according to claim 1, wherein
the restricting condition is displayed using a symbol corresponding to each character class, and
the symbol corresponding to the character class is displayed in each of the objects together with a message illustrating the correlated character class.

3. The image processing system according to claim 1 or 2, wherein
the restricting condition further includes designation of a specific character, and
the display operation unit further displays an object correlated with the specific character that can be designated.

4. The image processing system according to claim 3, wherein the display operation unit displays a plurality of objects correlated with a plurality of specific characters that can be designated instead of the object correlated with the character class while the plurality of objects are disposed in accordance with predetermined array when switching of the display is selected.

5. The image processing system according to any one of claims 1 to 4, wherein the display operation unit determines the character class of each character from character information, the character information is acquired by performing the character recognition to a reference image including a character string of the recognition target, and sets the character class of the character to an initial value of the restricting condition.

6. The image processing system according to claim 5, wherein the display operation unit displays the reference image together with the set restricting condition.

7. An image processing method for acquiring character information from an input image, the image processing method comprising the steps of:
presenting a screen in order to receive a setting of a restricting condition related to character recognition; and
performing the character recognition to a region included in the input image under the set restricting condition,
wherein the restricting condition includes at least designation of a character class in each character of a recognition target, and
the screen presenting step includes the steps of:
displaying, on an identical screen, a region indicating the set restricting condition and a plurality of objects correlated with a plurality of character classes that can be designated, and
adding the character class correlated with the selected object to the restricting condition when any one of the objects is selected.
